# EUROPÄISCHE PATENTSCHRIFT

(11) **EP 2 043 000 B1**
(45) Veröffentlichungstag und Bekanntmachung des Hinweises auf die Patenterteilung: **21.12.2011**
(21) Anmeldenummer: 08009003.8
(22) Anmeldetag: 18.02.2003
(51) Int. Cl.: G06F 15/80, G06F 9/30, G06F 15/78, G06F 15/173, G06F 13/40

(54) **Bussysteme und Rekonfigurationsverfahren**
Bus systems and reconfiguration method
Systèmes de bus et procédé de reconfiguration

(30) Priorität: 18.02.2002 DE 10206857; 27.08.2002 DE 10240000
(43) Veröffentlichungstag der Anmeldung: 01.04.2009
(62) Teilanmeldung aus: 03709624.5
(73) Patentinhaber: Richter, Thomas, 04703 Bockelwitz (DE); Krass, Maren, 8044 Zürich (CH)
(72) Erfinder: Vorbach, Martin, 67360 Lingenfeld (DE); Baumgarte, Volker, 80803 München (DE); Ehlers, Gerd, 8560 Grassbrunn (DE)
(74) Vertreter: Pietruk, Claus Peter

(56) Entgegenhaltungen:
- DE-A1- 19 651 075
- US-A- 5 410 723
- LIZY KURIAN JOHN ET AL: "A Dynamically Reconfigurable Interconnect for Array Processors" IEEE TRANSACTIONS ON VERY LARGE SCALE INTEGRATION (VLSI) SYSTEMS, IEEE SERVICE CENTER, PISCATAWAY, NJ, US, Bd. 6, Nr. 1, 1. März 1998 (1998-03-01), XP011063331 ISSN: 1063-8210
- BAUMGARTE V ET AL: "PACT XPP - A Self-Reconfigurable Data Processing Architecture" , 25. Juni 2001 (2001-06-25), XP002256066 Gefunden im Internet: URL:ftp://ftp.pactcorp.com/info/publicatio ns/ersa01.pdf> [gefunden am 2003-09-29]

## Beschreibung

Die vorliegende Erfindung befasst sich mit Verfahren und Ausgestaltungen von Bussystemen für konfigurierbare Architekturen. Die Optimierung der Konfigurations- und Rekonfigura-tionseffizenz wird besonders berücksichtigt.

Unter einer rekonfigurierbaren Architektur werden Bausteine (VPU) mit konfigurierbarer Funktion und/oder Vernetzung verstanden, insbesondere integrierte Bausteine mit einer Mehrzahl von ein- oder mehrdimensional angeordneten arithmetischen und/oder logischen und/oder analogen und/oder speichernden und/oder vernetzenden Baugruppen (im Folgenden PAEs) genannt) und/oder kommunikativen/peripheren Baugruppen (IO), die direkt oder durch ein oder mehrere Bussystem(e) miteinander verbunden sind. PAEs sind in beliebiger Ausgestaltung, Mischung und Hierarchie angeordnet. Diese Anordnung wird im weiteren PAE-Array oder PA genannt.

Zur Gattung dieser Bausteine zählen systolische Arrays, neuronale Netze, Mehrprozessor-Systeme, Prozessoren mit mehreren Rechenwerken und/oder logischen Zellen, Vernetzungs- und Netzwerkbausteine wie z. B. Crossbar-Schalter, ebenso wie bekannte Bausteine der Gattung FPGA, DPGA, XPUTER, etc. Hingewiesen wird insbesondere in diesem Zusammenhang auf die folgenden Schutzrechte desselben Anmelders: P 44 16 881.0-53, DE 197 81 412.3, DE 197 81 483.2, DE 196 54 846.2-53, DE 196 54 593.5-53, DE 197 04 044.6-53, DE 198 80 129.7, DE 198 61 088.2-53, DE 199 80 312.9, PCT/DE 00/01869, DE 100 36 627.9-33, DE 100 28 397.7, DE 101 10 530.4, DE 101 11 014.6, PCT/EP 00/10516, EP 01 102 674.7, PACT02, PACT04, PACT05, PACT08, PACT10, PACT11, PACT13, PACT21, PACT13, PACT18, PACT19, PACT16, PACT25, PACT27, PACT26/US. Diese sind hiermit zu Offenbarungszwecken vollumfänglich eingegliedert.

Die o.g. Architektur wird beispielhaft zur Verdeutlichung herangezogen und im Folgenden VPU genannt. Die Architektur besteht aus beliebigen arithmetischen, logischen (auch Speicher) und/oder Speicherzellen und/oder Vernetzungszellen und/oder kommunikativen/peripheren (10) Zellen (PAEs), die zu einer ein- oder mehrdimensionalen Matrix (PA) angeordnet sein können, wobei die Matrix unterschiedliche, beliebig ausgestaltete Zellen aufweisen kann, auch die Bussysteme werden dabei als Zellen verstanden. Der Matrix als ganzes oder Teilen davon zugeordnet ist eine Konfigurationseinheit (CT), die die Vernetzung und Funktion des PA beeinflusst. Bei solchen Architekturen sind noch Verbesserungen möglich, etwa bezüglich der Rekonfigurierungsdurchführung und/oder - geschwindig-keit.

Die Aufgabe der vorliegenden Erfindung ist es, Neues für die gewerbliche Nutzung bereitzustellen.

Die Lösung dieser Aufgabe wird unabhängig beansprucht. Bevorzugte Ausführungsformen finden sich in den Unteransprüchen.

### 1. Aufbau von Bussystemen

Eine herkömmliche Implementierung der Konfiguration erfordert eine Synchronisation zwischen den Objekten. Unter Objekten werden alle datenverarbeitenden Baugruppen (PAEs) und soweit erforderlich auch die datenübertragenden Baugruppen wie Bussysteme verstanden. Diese Synchronisation wird zentral, z. B. über einen FILMO (vgl. PACT04, PACT05, PACT10, PACT17) realisiert. Dadurch vergehen zwischen dem Ende einer alten Konfiguration (reconfig-Trigger, siehe PACTO8) und dem Beginn einer neuen Konfiguration (Objekt geht erneut in den Zustand "configured") mindestens so viele Takte wie der gepipelinete CM-Bus lang ist (Hin- und Rückweg, siehe PACT17).

Zur Beschleunigung werden erfindungsgemäß zwei Verfahren vorgeschlagen:
a) die erforderliche Reihenfolge wird durch zusätzliche Logik in den Objekten sichergestellt, z. B. Verwaltung von IDs;
b) die Objekte werden derart modifiziert, dass keine Reihenfolge mehr beachtet werden muss, sondern dass die ordentliche Verschaltung durch die Architektur der Objekte sichergestellt wird.

Für die folgenden Betrachtungen werden die in einer typischen rekonfigurierbaren Architektur vorhandenen Module in zwei Gruppen eingeteilt:
Busse Dieses Gruppe umfasst die Verbindungsleitung zwischen zwei Segmenten. Sie wird repräsentiert durch den Segment-Switch an seinem Ende.

Objekt In dieser Gruppe werden alle Objekte zusammengefaßt, die einen Anschluss an einen Bus besitzen, das heißt beliebige PAE (z. B. Speicher, ALUs), 10, etc., beziehungsweise mit ihrer Umwelt kommunizieren,

Abhängigkeiten bestehen typischerweise vor allem zwischen allen direkt benachbarten Objekten. Dies sind im Einzelnen:
Bus zu Bus Ein Bus wird dabei repräsentiert durch den Segment-Switch am Ende eines Busses.

Objekt zu Bus Objekt ist dabei beliebig aus FREG, BREG, ALU und RAM zu wählen. Ebenso zählt alles als Objekt in diesem Sinne, was einen Connect besitzt.

Objekt zu Objekt Diese sind für gewöhnlich nicht direkt benachbart, es liegt normalerweise ein Bus dazwischen. Dann besteht keine Abhängigkeit. Im Falle einer direkten Zusammenschaltung verhält sich die Verbindung je nach Ausgestaltung gemäß "Bus zu Bus" und/oder "Objekt zu Bus".

### 1.1 Bus zu Bus Abhängigkeit

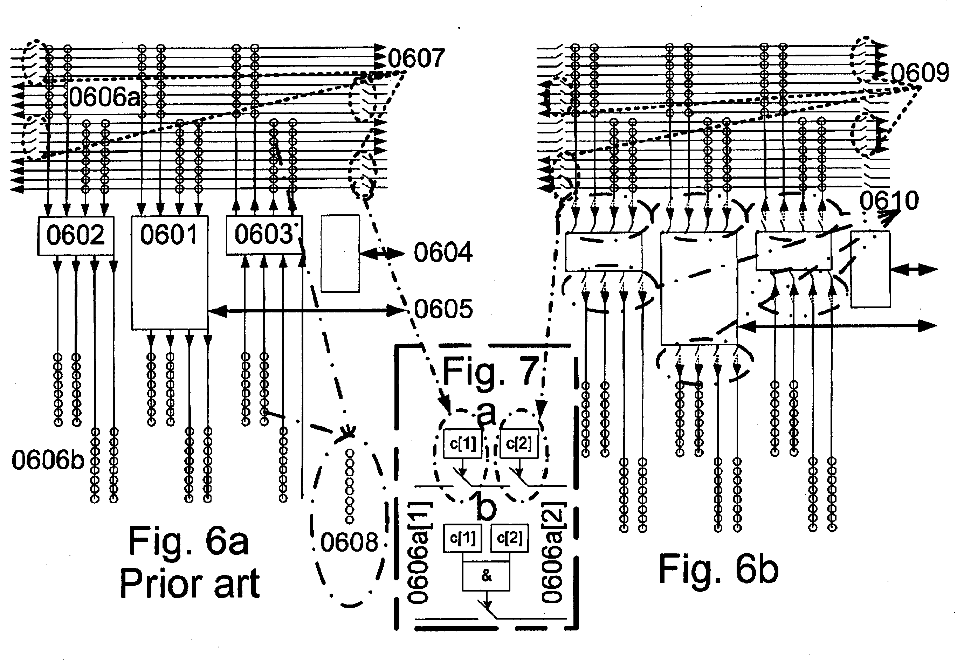

Längere Busse werden nach dem Stand der Technik beispielsweise von hinten nach vorne konfiguriert. Ein Beispiel für den nachfolgend beschriebenen Bausaufbau ist in Figur 6a aufgezeigt. Das letzte Bus-Segment (0606a) wird mit offenem Bus-Switch (0607) konfiguriert, alle anderen mit geschlossenem Bus-Switch. Die Einhaltung der Reihenfolge ist erforderlich, um zu verhindern, dass Daten von einem weiter vorne liegenden Bus in einen weiter hinten liegenden laufen, der noch zu einer anderen Konfiguration gehört.

### 1.2 Bus zu Objekt Abhängigkeit

Nach dem Stand der Technik darf ein Objekt (z. B. 0601, 0602, 0603) erst dann konfiguriert werden, wenn sichergestellt ist, dass die von dem Objekt benutzten Busse (0606a, 0606b) bereits konfiguriert sind. Auch diese Abhängigkeit besteht, um sicherzustellen, dass keine Daten in eine fremde Konfigura-tion laufen (PAE-Ausgang) bzw. von einer fremden Konfigura-tion genommen werden (PAE-Eingang).

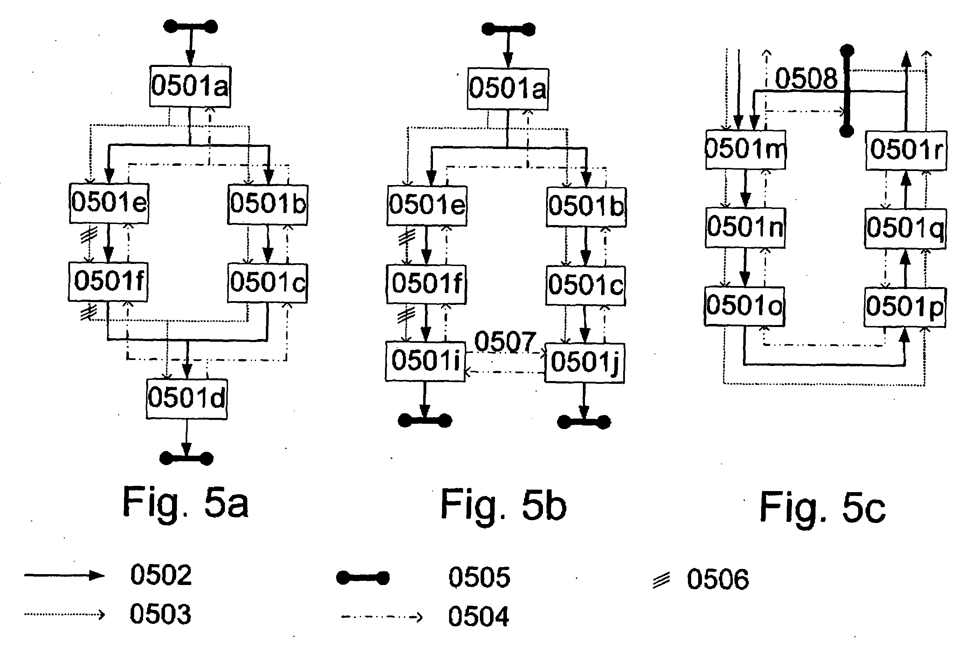

Zusammenfassend lässt sich feststellen, dass eine Abhängigkeit immer dann besteht, wenn ein Objekt eine Verbindung zu einem anderen Objekt herstellt bzw. hergestellt hat und/oder herstellen will. Dies erfolgt über die Connection-Mask (0608), die die Aufschaltung der Objekt Ein- und/oder Ausgänge auf die Busse steuert (z. B. über Multiplexer, Transmis-sion-Gates oder ähnliches, siehe auch PACT18, Fig. 5 und Fig. 7c) und/oder geschlossene Bus-Switche (0607), die die Informationsübertragung über einen Bus (z. B. von einem Segment (0606a[1]) zu einem weiteren Segment (0606a[2]) ermöglichen. Mit anderen Worten gibt diese als Connection-Mask bezeichnete Verbindungsmaske an, welche der horizontal verlaufenden Busstrukturen mit welchen der vertikal verlaufenden Busstrukturen verbunden werden und wo dies geschieht; dass dabei auch z. B. ein "Spurwechsel" auf einer horizontalen Busstruktur möglich ist, sei der Vollständigkeit halber erwähnt. Dabei darf die Verbindung erst dann hergestellt werden, wenn sichergestellt ist, dass das Objekt, zu dem die Verbindung erstellt werden soll, bereits zur gleichen Konfiguration gehört (das heißt bereits entsprechend konfiguriert ist.

### 2. Kontrolle über ID-Verwaltung

Der erste erfindungsgemäße und beanspruchte Ansatz ist, in jedem Objekt die ID oder Array-ID (vgl. PACT10) zu speichern, die das Objekt aktuell verwendet. Es wird also Information darüber abgelegt, welcher Aufgabe bzw. Konfiguration das jeweilige Objekt momentan zugeordnet ist. Sobald eine Verbindung zwischen zwei Objekten konfiguriert wird (z. B. zwischen einem PAE-Ausgang und einem Bus), ist im Voraus zu prüfen, ob beide Objekte dieselbe ID/Array-ID besitzen. Ist dies nicht der Fall, darf die Verbindung nicht hergestellt werden. Es wird also eine Verbindung abhängig von einem Kennzeichnungsinformationsvergleich aktiviert und/oder zugelassen.

Obwohl dieses Verfahren grundsätzlich vergleichsweise trivial ist, erfordert es einen hohen Hardware-Aufwand, da für jede mögliche Verbindung Register für die Speicherung der ID/Array-ID und Komparatoren zum Vergleich der ID/Array-ID der beiden zu verbindenden Objekte notwendig sind.

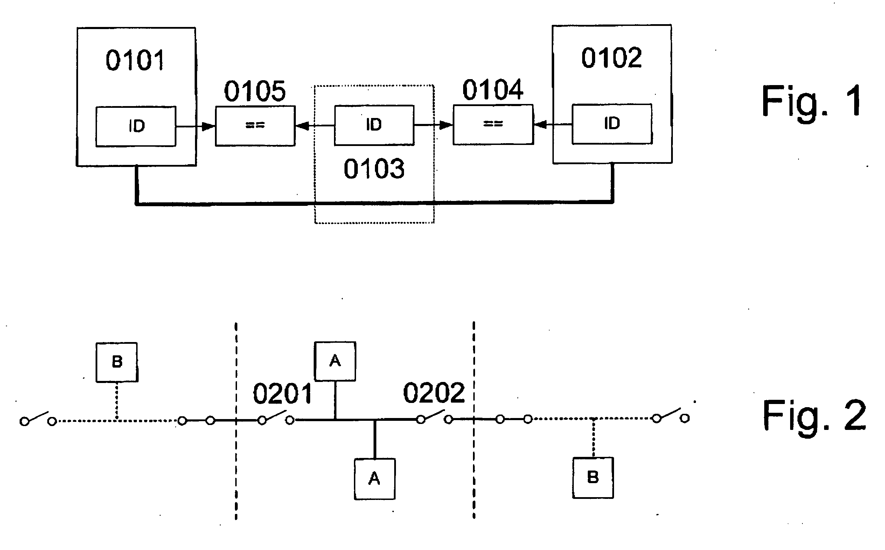

Figur 1 zeigt die zwei PAEs (0101, 0102) mit ihren dazugehörenden IDs sowie einen Bus (0103) mit ID. Über die Komparatoren (0104, 0105) wird jede PAE/Bus-Verbindung geprüft. Die Figur dient nur dazu, das Grundprinzip zu verdeutlichen ohne beschränkend zu sein. Sofern alle Ressourcen (Ein-/Ausgänge der PAEs, Busse) berücksichtigt werden, steigen die Komplexität und der damit verbundene Hardwareaufwand erheblich an.

Ein technisch günstiger zu realisierendes und daher bevorzugtes erfindungsgemäßes Verfahren wird in den folgenden Abschnitten besprochen:

### 3. Kontrolle über Vernetzungsstruktur

Abbildung Figur 2 zeigt ein Bus-Segment, das von Konfiguration A und B benötigt wird. Es ist jedoch wie dargestellt noch von Konfiguration A belegt. Konfiguration B kann unabhängig davon die beiden benachbarten Busstücke bereits belegen. Durch die neuen, doppelten Bus-Switches (0201 und 0202, entsprechend 0607 und gem. Fig. 6b 0609) kann erfindungsgemäß ausgeschlossen werden, dass Daten von Konfiguration B den Datenfluss von Konfiguration A stören. Ebenso laufen keine Daten von Konfiguration A nach B. Hierbei wird bei der Konfiguration B vorausgesetzt, dass Konfiguration A korrekt implementiert wurde und der Bus-Switch am Ausgang geöffnet ist.

Sobald sich Konfiguration A beendet, wird der frei werdende Bus von Konfiguration B belegt und Konfiguration B beginnt zu arbeiten.

Mit anderen Worten liegt ein Grundprinzip des Verfahrens darin, dass jedes Element, das an einer Datenübertragung beteiligt ist, sich selbständig auf die entsprechende Datenquelle und/oder den Datensender aufschaltet, also selbst die Kontrolle besitzt, auf welche Datensender/-empfänger es entsprechend der Konfiguration aufzuschalten ist.

### Bus zu PAE-Eingang

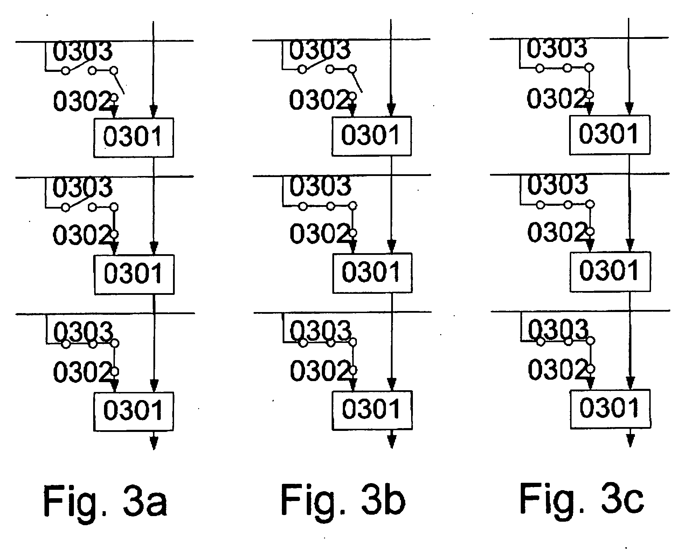

Abbildung Figur 3 zeigt einen PAE-Eingang (0301), der an die unteren beiden der drei abgebildeten Busse angeschlossen werden soll. Die vertikalen Schalter entsprechen einem einfachen Verbindungsschalter der Connection Mask (0608) zum Aufschalten auf den Bus, die durch die PAE verwaltet werden (0302), die horizontalen Schalter (0303 entsprechend 0610) werden zusätzlich über den Bus konfiguriert, um eine korrekte Aufschaltung sicherzustellen.

In Abbildung Figur 3a ist der mittlere Bus noch von einer anderen Konfiguration belegt. Dennoch kann das Objekt mit dem PAE-Eingang vollständig konfiguriert werden. Daten vom mittleren Bus können nicht unbeabsichtigt in das Objekt laufen, da dies durch die Konfiguration des Busses (Schalter 0303) verhindert wird.

In Abbildung Figur 3b hat die alte Konfiguration terminiert und wurde durch die neue Konfiguration ersetzt. Jetzt sind beide Busse verfügbar. Zur Bestimmung, welche Busse tatsächlich aufgeschaltet werden, dienen nur die vertikalen Schalter (0302).

In Abbildung Figur 3c wird schließlich der obere Bus von einer dritten Konfiguration belegt, die ebenfalls den gezeigten PAE-Eingang verwenden möchte. Der Bus wird deshalb bereits so konfiguriert, dass an dieser Stelle Daten entnommen werden können. Dies hat allerdings keinerlei Auswirkungen auf das Objekt, da die PAE Konfiguration an dieser Stelle keine Verbindung vorsieht. Die Verbindung wird also erst hergestellt, wenn die Konfiguration des PAE-Eingangs wechselt.

### Bus-PAE-Ausgang

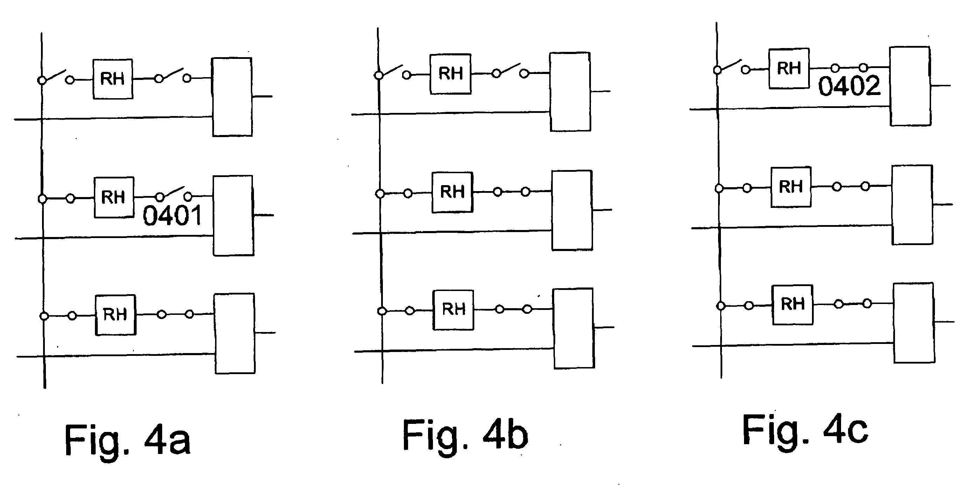

Dies ist eine Verbindung, bei der die Verwendung von zwei getrennten Schaltern besonders bevorzugt ist. In den (beiden) anderen Fällen kann es bevorzugt sein, die Funktionalität auch mit einem Schalter zu realisieren, der von zwei Konfig-Bits gesteuert wird, die zur Bestimmung des Schalterzustandes Boolsch logisch miteinander verknüpft werden, vorzugsweise durch eine AND-Verknüpfung. Abbildung Figur 4 zeigt einen PAE-Ausgang, der an die unteren beiden der drei abgebildeten Busse angeschlossen werden soll. Das Objekt wird unabhängig von der Verfügbarkeit der Busse konfiguriert, die jeweils linken Schalter der Abbildung entsprechen der Connection-Mask.

In Abbildung Figur 4a ist der mittlere Bus (0401) noch von einer anderen Konfiguration belegt. Vom Output-Register kann jetzt ein Datenpaket in den Connect geschickt werden. Dieses wird in den angeschlossenen RdyHold (vgl. PACT18) Stufen gespeichert. Das Paket kann durch den geöffneten Schalter des mittleren Busses nicht übertragen und somit auch nicht geACKt werden, das heißt der Sender erhält keine Empfangsbestätigung. Das Objekt kann also bei üblichen Protokollen keine weiteren Datenpakete übertragen.

In Abbildung Figur 4b wurde jetzt der mittlere Bus umkonfiguriert, das heißt der Schalter geschlossen, so dass auch hier Daten übertragen werden können. Ein eventuell bereits gespeichertes Paket liegt jetzt auf dem Bus, ansonsten funktioniert alles wie früher.

In Abbildung Figur 4c wird der obere Bus (0402) von einer dritten Konfiguration angefordert; der busseitige Schalter hinter dem RM bleibt ?? entsprechend offen, da busseitig ein Datentransfer zu verhindern ist. Auch hier verhält sich ansonsten alles wie früher.

### Ergebnis

Mit verhältnismäßig geringem Hardwareaufwand lässt sich die Rekonfigurationsperformance erheblich steigern. Es wird dadurch insbesondere noch besser möglich, mehrere vollständige Konfigurationen in die Objekte vorzuladen, weil diese dann je Objekt einzeln selbständig und unabhängig gemäß dessen aktuellem Datenverarbeitungsstatus konfiguriert werden können, ohne dass Probleme zu erwarten sind.

Nach dem Eintreffen des Rekonfigurationssignales, das eine Rekonfiguration anfordert, benötigt jedes Objekt, bis es wieder konfiguriert ist, lokal nur noch soviele Takte, wie Konfigurationsworte erforderlich sind, wenn hierbei taktweise Konfigurationswortübertragung unterstellt wird. Die Rekonfigurationszeit lässt sich durch einen zweiten Registersatz weiter, näherungsweise gegen 0 Takte drücken, wenn in diesem Konfigurationen vorabgelegt sind.

Der zusätzliche Hardwareaufwand für Busse und PAE-Eingänge kann sich in einer optimierten und erfindungsgemäß bevorzugten Implementierung auf ein zusätzliches Konfigurationsbit und AND-Gate pro Bus-Switch und pro Anzahl Busse * Anzahl PAE-Eingänge beschränken. Dies ist in Figur 7 dargestellt.

In Figur 7a wird ein linker Bus (0606a[1]) mit einem rechten Bus (0606a[2]) über die Bus-Switches verbunden. Jedem Bus-Switch ist ein Konfigurationsbit zugeordnet, das angibt, ob der Schalter offen oder geschlossen konfiguriert ist (c[1] für den linken Bus und c[2] für den rechten Bus). In Figur 7b wird dieselbe Funktion anstatt mit zwei Schaltern durch einen einzelnen Schalter realisiert. Die beiden Konfigurationsbits c[1] und c[2] werden mittels eines AND-Gatters (&) logisch miteinander verknüpft, so dass der einzelne Schalter nur geschlossen wird, wenn beide Konfigurationsbits in diesem Beispiel logisch b'1 sind. Alternativ ist eine Realisierung mittels eines OR-Gatters sinnvoll, wenn eine logische b'0 einen geschlossenen Schalter anzeigen soll.

Die PAE-Ausgänge können eventuell je nach Implementierung ein wenig mehr Aufwand erfordern, sofern jeweils ein zusätzlicher Schalter als notwendig erachtet wird. In diesem Zusammenhang sei darauf hingewiesen, dass es zwar möglich ist, an bzw. zwischen allen Objekten die erfindungsgemäße Verbindung vorzusehen, dass dies aber keinesfalls zwingend ist. Vielmehr ist es möglich, nur bei Teilen eine Implementierung der erfindungsgemäßen Ideen zu bewirken.

Figur 6b zeigt beispielhaft einen erfindungsgemäßen Aufbau eines Objektes und eines Busses. Der Grundaufbau entspricht dem Stand der Technik nach Fig. 6a bzw. nach PACT18, dort Fig. 5 und 7c, daher werden nur die gegenüber dem Stand der Technik neuen Elemente in Fig. 6b neu beschrieben. Erfindungsgemäß neu hinzugefügt sind die Schalter an den Busenden 0609, so dass die Busse durch die Schalter 0607 und 0609 vollständig auftrennbar sind. Ebenfalls neu sind Schalter (0610) an den Ein- und Ausgängen der Objekte (PAEs), die die korrekte Aufschaltung auf die Busse regeln.

Das Grundprinzip ist nunmehr derart, dass jedes Objekt und/ oder jeder Bus selbständig regelt bzw. festlegt, welche Verbindungen momentan aufgebaut werden bzw. bleiben. Dass diese Festlegung durch das einzelne Objekt bzw. den einzelnen Bus konfigurationsabhängig geschieht, also keinesfalls willkürlich, sei erwähnt. Es liegt also quasi ein Delegieren der Verbindungsverwaltung an die beteiligten Objekte vor. Über die Schalter 0607 und 0609 kann jeder Bus per se regeln, auf welchen anderen er sich konfigurationsgemäß aufschaltet. Kein Bus kann sich nunmehr auf einen anderen aufschalten (z. B. mittels 0607), ohne dass der andere dies durch eine entsprechende Schalterstellung seiner Bus-Switches (z. B. 0609) zulässt.

Es soll ausdrücklich angemerkt werden, dass der Schalter 0607 nach dem Stand der Technik auch am Ausgang eines Busses angeordnet sein könnte und der Schalter 0609 demgemäß am Eingang des Busses hinzugefügt wird.

Die Schalter 0610 sind bevorzugt ebenfalls Doppelschalter, wobei ein Schalter von dem PAE Objekt gesteuert wird und der andere Schalter durch das jeweilige Bussystem 0606a bzw. 0606b. Besonders anzumerken ist, dass ein Schalter lediglich gestrichelt angedeutet ist. Dieses ist der vom Bus 0606a und/oder 0606b gesteuerte Schalter, der "virtuell" durch die Einstellung der Connection-Mask (0608) realisiert sein kann.

### 5. Rekonfigurationssteuerung

Die Steuerung der Rekonfiguration wird in der VPU Technologie durch Signale (Reconfig) ausgelöst, die zumeist mit den Datenpaketen und/oder Triggerpaketen über die Bussysteme propagiert werden und anzeigen, dass eine bestimmte Ressource umkonfiguriert werden kann oder soll, gegebenenfalls wird gleichzeitig die neue Konfiguration selektiert (siehe PACT08, PACT13).

Sofern ein rekonfigurierbarer Baustein nur partiell umkonfiguriert werden soll, ist es erforderlich, Reconfig an bestimmten Stellen entsprechend des Algorithmus zu unterbrechen. Diese Unterbrechung, die die Weiterleitung von Reconfig verhindert, wird als ReconfigBlock bezeichnet. ReconfigBlocks werden für gewöhnlich an den Grenzen einer Konfiguration zur nächsten eingeführt, um diese entsprechend voneinander zu trennen.

Zum Versenden von Reconfig bestehen unterschiedliche Strategien, die entsprechend der Anforderung des Algorithmus gewählt werden.

Es werden nun drei mögliche und bevorzugte Ausgestaltungen beschrieben, die insbesondere jeweils einzeln und/oder kombiniert verwendet werden können und die ein unterschiedliches Verhalten aufweisen, wobei es gegenüber dem Stand der Technik als für sich erfinderisch angesehen wird, dass zwischen solchen paarweise wählbar ist.
a) ForcedReconfig: Die einfachste Strategie ist das Versenden des Reconfig über alle Interfaces eines Objektes, das heißt es propagiert entlang der Datenpfade und/oder Triggerpfade, die zu einer bestimmten Konfiguration gehören, während andere Konfigurationen unberührt bleiben. Damit ist sichergestellt, dass alle verbundenen Objekte im PA das Signal erhalten. Zur Einschränkung muss an geeigneten Stellen geblockt werden. Dieses Verfahren bzw. Signal stellt sicher, dass eine Konfiguration komplett entfernt wird. Das Signal wird im Folgenden mit ForcedReconfig bezeichnet. Das Signal sollte nur verwendet werden, nachdem alle Daten in den betreffenden Objekten verarbeitet und entfernt wurden, da keinerlei Synchronisation mit der Datenverarbeitung stattfindet. Obwohl also alle Objekte, die zu einer bestimmten Konfiguration innerhalb eines Arrays gehören, gezwungen werden, eine Rekonfiguration zuzulassen, bleiben andere, gleichzeitig auf anderen Objekten desselben Arrays laufende Konfigurationen unberührt.
b) SyncReconfig: Ein Reconfig wird zusammen mit den entsprechenden Daten und/oder Triggern versendet. Das Versenden erfolgt nur zusammen mit aktiven Daten- und/oder Triggerpaketen. Das Signal wird bevorzugt zusammen mit dem letzten zu verarbeitenden Daten- und/oder Triggerpaket weitergeleitet und zeigt das Ende der Datenverarbeitung nach diesem Daten-/Triggerpaket an. Benötigt eine PAE mehrere Takte zur Abarbeitung, wird die Weiterleitung von SyncReconfig so lange verzögert, bis das Trigger- und/oder Datenpaket tatsächlich verschickt wird. Somit verhält sich dieses Signal synchron mit der letzten Datenverarbeitung. Wie nachstehend beschrieben wird, kann diese synchronisierte Rekonfiguration gemäß der vorliegenden Erfindung an bestimmten Stellen blockiert werden.
c) ArrayReset: Als eine Erweiterung von ForcedReconfig kann ArrayReset verwendet werden, das nicht geblockt werden kann und zu einer Rekonfiguration des kompletten Arrays führt. Dieses Verfahren ist besonders dann sinnvoll, wenn z. B. eine Applikation terminiert wird oder ein Illegal Opcode (vgl. PACT19) bzw. Timeout einer Konfiguration auftrat und für eine ordentliche Terminierung der Konfiguration mit anderen Strategien nicht garantiert werden kann. Dies ist insbesondere für ein Power-On-Reset oder ähnliches von Bedeutung.

### 5.1 SyncReconfig

SyncReconfig wird immer mit gültigen, aktiven Daten oder Triggern propagiert.

Probleme treten nunmehr auf, wenn z. B. in einer Verzweigung das Signal nur in den aktiven Zweig propagiert wird (Figur 5a) oder eine Verzweigung oder Zusammenführung durch fehlende Daten und/oder Trigger blockiert wird (Figur 5b).

Um dieses Problem zu lösen, wird die Semantik von SyncReconfig folgendermaßen definiert: Das Signal weist darauf hin, dass nach Erhalt und vollständiger Verarbeitung der Daten/Trigger sämtliche Daten- /Triggerquellen (Quellen) und Busse rekonfiguriert werden, die zum Eingang jenes Objektes führen, welches das SyncReconfig erhielt. Dazu kann ein Signal ReconfigEcho eingeführt werden. Nach dem Eintreffen von SyncReconfig bei einem Ziel-Objekt wird von diesem ReconfigEcho generiert, und zwar bevorzugt erst und sobald das Ziel-Objekt die Daten vollständig verarbeitet hat, die mit dem SyncReconfig eintrafen. Dieses generierte ReconfigEcho wird dann an sämtliche mit dem Objekt bzw. dessen Eingängen verbundene Quellen gesendet und führt zur Rekonfiguration bzw. Rekonfigurierbarkeit der Quellen und/oder der daten- bzw. triggerübermittelnden Bussysteme.

Erhält ein Objekt ein ReconfigEcho, wird dieses Signal stromaufwärts weiterübertragen, d. h. es wird über alle Eingänge mit noch geschlossenen Bus-Switches über die Busse an dessen Quellen weiterübertragen. So wird ReconfigEcho nach seiner Erzeugung zu den Daten- und/oder Triggerquellen, die in ein Objekt speisen, gesandt und von dort laufen die Signale weiter.

Ein/Ausgänge, die bereits ein SyncReconfig erhielten, werden durch das Eintreffen bevorzugt passiv, das heißt sie führen keinerlei Daten-/Triggertransfers mehr durch. Je nach Ausgestaltung kann ein SyncReconfig nur die Passivschaltung des Eingangs bewirken, bei dem das Signal eintraf, oder die Passivschaltung aller Eingänge der PAE.

Für gewöhnlich trifft ein ReconfigEcho an Ausgängen von PAEs ein. Dies bewirkt die Weiterleitung von ReconfigEcho über die Eingänge der PAE, sofern diese nicht bereits durch ein eingegangenes SyncReconfig passiv geschaltet wurden.

In einigen Fällen, wie beispielsweise in den Figuren 5a-c, kann ReconfigEcho auch an den Eingängen auftreten. Dies kann je nach Ausgestaltung zur Passivschaltung des Eingangs, bei dem das Signal eintraf, führen oder in einer bevorzugten Ausführung die Passivschaltung aller Eingänge der PAE auslösen.

### 5.2 Trigger mit Reconfig-Semantik

In einigen Fällen (z. B. Figur 5b) ist eine implizite Propagierung von Rekonfig-Signalen (i.b. SyncReconfig, ReconfigEcho) nicht möglich.

Für die erforderliche explizite Übertragung von beliebigen Reconfig-Signalen kann das Trigger-System nach PACT08 verwendet werden, wobei dazu die Trigger-Semantik entsprechend erweitert wird. Trigger können somit beliebige Status- und Kontrollsignale (wie z.B. Carry, Zero, Overflow, STEP, STOP, GO, vgl. PACT08, PACT13, PACT18) übertragen, ebenso wie die impliziten Reconfig-Signale. Weiterhin kann ein Trigger die Semantik SyncReconfig, ReconfigEcho, ForcedReconfig annehmen.

### 5.3 Blocken

An jeder Schnittstelle, die ein SyncReconfig versendet, kann eingestellt werden, ob die Versendung bzw. Weiterversendung stattfinden soll. Das Unterbinden der Propagation führt zu einem Anhalten einer Rekonfigurationswelle, die sich sonst über das Array bzw. die davon betroffene Konfiguration ausbreiten würde. Ungeachtet der - wie erwähnt sei - für bestimmte Stellen bei der Konfiguration, selbstmodifizierend oder datenabhängig und/oder unter bzw. für bestimmte Bedingungen festzulegenden Blockaden können aber Daten- und/oder Triggersignale weiter über eine blockierte Stelle laufen, um wie mit der geschützten Konfiguration bzw. einem geschützten Konfigurationsteil vorgesehen, weiter verarbeitet zu werden wie zuvor.

Es wäre gegebenenfalls auch möglich, die Reaktion auf die Rekonfigurationsanforderung lokal zu unterbinden, das heißt lokal die Rekonfigurationsaufforderung zu ignorieren, aber dennoch an nachfolgende, geblockte oder ungeblockte Objekte ein für das Eintreffen eines lokal ignorierten Rekonfigurations-aufforderungsignales indikatives Signal zu senden.

Im Regelfall wird es jedoch bevorzugt, dann, wenn einzelne Objekte einer Konfiguration geblockt werden sollen, das Rekonfigurationsaufforderungssignal über separate Busse, Bussegmente oder Leitungen an nachfolgende Objekte an einem blockenden Objekt vorbei zu leiten. So lässt sich der normalerweise bevorzugte Fall besser einhalten, bei welchem das Rekonfigurationsaufforderungssignal in das Objekt eindringen muss, also nicht etwa nur peripher in Vorwärts- oder Rückwärtsregistern, so diese vorgesehen sind, weitergeleitet wird und somit an der eigentlichen Zelle vorbeiläuft. Es ist dann bevorzugt, dass sich bei einem Blocken des Rekonfigurations-aufforderungssignals (oder eines bestimmten Rekonfigurations-aufforderungssignals unter einer Mehrzahl unterscheidbarer Rekonfigurationsaufforderungssignale) dieses geblockte Rekonfigurationsaufforderungssignal im jeweiligen Objekt "totläuft", also nicht weitergereicht wird.

Sofern die Annahme des SyncReconfig an der empfangenden Schnittstelle blockiert wird, schaltet das empfangende Objekt die Schnittstelle, die das SyncReconfig empfing, passiv (das heißt die Schnittstelle versendet bzw. empfängt keine Daten mehr); ansonsten reagiert das Objekt nicht auf das Signal, kann jedoch um die Auflösung des übertragenden Bussystems zu ermöglichen, ReconfigEcho zurücksenden.

Des weiteren ist es, unabhängig und/oder gemeinsam mit einem ReconfigBlock, möglich, das ReconfigEcho zu blockieren.

### 5.4 Auswirkung von SyncReconfig und ForcedReconfig auf Bussysteme

Um sicherzustellen, dass bereits nach der Übertragung eines SyncReconfig über einen Bus keine nachfolgenden Daten und/ oder Trigger übertragen werden, die z. B. von einer nachfolgenden Konfiguration stammen und somit falsch verarbeitet würden, wird bevorzugt durch SyncReconfig die Weiterleitung der Handshake-Signale RDY/ACK (vgl. PACT02) - die das Vorhandensein von gültigen Daten auf dem Bus anzeigen und die Datenübertragung steuern - über den Bus blockiert. Die Busverbindungen selbst, also das Daten- und/oder Triggernetzwerk wird jedoch nicht abgerissen, um die Rücksendung von ReconfigEcho über das Bussystem zu ermöglichen. Erst mit der Übertragung von ReconfigEcho wird der Bus abgebaut und rekonfiguriert.

Mit anderen, allgemeineren Worten verhindert das Auftreten SyncReconfig zunächst die Weiterleitung von Daten und/oder Triggern, mit Ausnahme von ReconfigEcho, beispielsweise durch das Blockieren der Handshake-Protokolle, über einen Bus und ReconfigEcho bewirkt nachfolgend das Auflösen und Rekonfigurieren des Busses.

Andere in der Wirkung äquivalente Methoden können verwendet werden, z. B. könnten Daten- und Triggerverbindungen bereits beim Durchlauf von SyncReconfig abgerissen werden, während die ReconfigEcho-Verbindung erst beim Auftreten von ReconfigEcho abgebaut wird.

Damit ist sichergestellt, dass Daten und Trigger unterschiedlicher, nicht zusammengehörender Konfigurationen nicht fälschlicherweise unter den Konfigurationen ausgetauscht werden.

Figur 5 zeigt beispielhaft PAEs (0501) mit unterschiedlich konfigurierten Vernetzungen. Die folgenden Übertragungen sind definiert: Daten- und/oder Triggerbusse (0502), SyncReconfig (0503), ReconfigEcho (0504). Weiterhin ist ReconfigBlock (0505) dargestellt. 0506 zeigt an, dass SyncReconfig nicht weitergeleitet wird.

In Figur 5a ist eine Verzweigung abgebildet, wie sie beispielsweise durch ein IF-THEN-ELSE Konstrukt in einem Programm entstehen kann. Nach einer PAE werden die Daten in zwei Pfade verzweigt (0510, 0511) von denen immer nur einer aktiv ist. In dem dargestellten Fall wird ein letztes Datenpaket zusammen mit SyncReconfig übertragen, der Zweig 0510 ist nicht aktiv und leitet daher weder die Daten noch SyncReconfig weiter. Der Zweig 0511 ist aktiv und leitet die Daten und SyncReconfig weiter. Das übertragende Bussystem kann bevorzugt nach der Übertragung bereits inaktiv geschaltet werden und kann lediglich das ReconfigEcho zurück übertragen. Die PAE 0501b erhält das SyncReconfig und sendet es an die PAE 0501c weiter, sie sendet an 0501a das ReconfigEcho zurück, woraufhin 0501a und das Bussystem zwischen 0501a und 0501b rekonfiguriert wird. Die Übertragung zwischen 0501b und 0501c verläuft entsprechend.

0501e hat das SyncReconfig von 0501a ebenfalls erhalten, jedoch ist der Zweig nicht aktiv. Daher reagiert 0501e nicht, das heißt 0501e sendet weder das SyncReconfig an 0501f noch das ReconfigEcho an 0501a zurück.

0501c verarbeitet die eingehenden Daten und sendet das SyncReconfig an 0501d weiter. Der Ablauf entspricht zunächst wiederum der Übertragung von 0501a nach 0501b. 0501d generiert nach der Verarbeitung der Daten ein ReconfigEcho, das aufgrund der Zusammenführung der Zweige auch an 0501f gesendet wird. Obwohl 0501f keine Datenoperation durchführte, wird die Einheit rekonfiguriert und sendet das ReconfigEcho an 0501e, die daraufhin ebenfalls - ohne dass aktuell eine Datenverarbeitung stattfände - rekonfiguriert wird.

Das von 0501b nach 0501a übertragene ReconfigEcho kann in einer bevorzugten Ausgestaltung auch an 0501e übertragen werden und trifft dort an einem Eingang ein. Dies führt zur Passivschaltung des Einganges und - in einer erweiterten Ausführung, gegebenenfalls auch konfigurierbar - zur Passivschaltung aller Eingänge.

Um den Beispielen in Figur 5 einen lokalen Charakter zu geben, wurden die Ein-/Ausgänge der Darstellungen mit einem ReconfigBlock versehen, wodurch die Weiterleitung von SyncReconfig und ReconfigEcho unterbunden wird.

Figur 5b verhält sich weitgehend identisch mit Figur 5a, weshalb auch dieselben Referenzen verwendet werden. Der rechte Pfad ist ebenfalls wieder aktiv, der linke inaktiv. Wesentlicher Unterschied ist, dass anstatt einer Zusammenführung der Pfade bei 0501d die Pfade nunmehr offen bleiben und beispielsweise direkt an ein peripheres Interface führen. In derartigen Fällen ist es bevorzugt und möglich, zwischen den PAEs (0501i und 0501j) eine explizite Verdrahtung von ReconfigEcho über Triggerleitungen vorzusehen (0507).

In Figur 5c ist die beispielhafte Ausführung einer Schleife dargestellt. Die Schleife läuft über die PAEs 0501m..0501r. Die Übertragungen zwischen den PAEs 0501m..0501r sind entsprechend der vorhergehenden Ausführungen, insbesondere zu den Übertragungen zwischen 0501b und 0501c, offensichtlich, da äquivalent.

Besonders zu beachten ist die Übertragung zwischen 0501r und 0501m. Beim Auftreten von ReconfigEcho an 0501m wird der Bus (0508) zwischen 0501m und 0501r durch die Übertragung von ReconfigEcho rekonfiguriert. ReconfigEcho ist am Ausgang von 0501r geblockt; dadurch wird 0501r nicht rekonfiguriert, der betreffende Ausgang jedoch beim Eintreffen von ReconfigEcho passiv geschaltet, das heißt 0501r leitet keine Ergebnisse mehr auf den Bus. Dadurch kann der Bus von einer beliebigen anderen Konfiguration benutzt werden.

Sobald 0501r das ReconfigEcho von 0501q erhält, wird 0501r am Ende der Datenverarbeitung rekonfiguriert. Der ReconfigBlock und/oder die Passivschaltung der Busverbindung zu 0501m (0508) verhindern die Weiterleitung in Richtung 0501m. 0501m und 0508 können mittlerweile von einer anderen Konfiguration verwendet werden.

### 6.0 SyncReconfig-II

Ein weiteres optionales und, je nach Anwendung, Einsatzgebiet und/oder Ausgestaltung des Halbleiters oder Systems zu bevorzugendes Verfahren zur Steuerung des SyncReconfig-Protokolls wird nachfolgend beschrieben:

Das Verfahren ist wie folgt definiert:
1. SyncReconfig wird prinzipiell über alle verbundenen (Daten- und/oder Trigger-)Busse einer PAE versendet, auch über die, die aktuell (zum jetzigen Takt) keine Daten und/oder Trigger übertragen.
2. Damit eine PAE SyncReconfig entsprechend Abs. 1 weiterleitet, müssen zuvor alle verbunden Eingänge der PAE das SyncReconfig erhalten haben.
2a. Rückkopplungen in der Datenstruktur (z. B. Schleifen) erfordern eine Ausnahme des Postulates nach Abs. 2. Die Rückkopplung wird ausgenommen, das heißt es ist ausreichend, wenn alle verbundenen Eingänge einer PAE außer der oder den schleifenartig zurückgekoppelten das SyncReconfig erhalten haben, damit dieses weitergeleitet wird.
3. Verarbeitet eine PAE Daten (u. U. auch mehrzyklisch, z. B. Division) wird ein SyncReconfig, wenn dieses entsprechend 2 und 2a an den Eingängen anliegt, zum Zeitpunkt der Fertigberechnung und Weiterleitung der Daten und/oder Trigger an den oder die Empfänger weitergeleitet. Mit anderen Worten überholt kein SyncReconfig die Datenverarbeitung.
4. Verarbeitet eine PAE keine Daten (z. B. da keine Daten an den Eingängen anstehen und/oder ein entsprechender Trigger zur Freischaltung der Datenverarbeitung aussteht (siehe PACT08)), hat jedoch an sämtlichen konfigurierten Eingängen das SyncReconfig erhalten, so überträgt die PAE das SyncReconfig über alle konfigurierten Ausgänge weiter. Eine Datenverarbeitung findet nicht statt (da keine Eingangsdaten anstehen und/oder ein Freischalttrigger (PACT08) aussteht), demgemäß werden auch keine Daten weiterübertragen. Mit anderen Worten: Nicht datenverarbeitende PAEs leiten SyncReconfig sofort, jedoch gegebenenfalls taktsynchron, zu den verbundenen Empfängern weiter.

Bevorzugt wird SyncRekonfig mit Handshake-Signalen übertragen (z. B. RDY/ACK = ReaDY/ACKnowledge). Eine SyncReconfig absendende PAE geht erst in den Zustand rekonfigurierbar, wenn alle Empfänger den Empfang von SyncReconfig zur Bestätigung mittels eines ACK(nowledge) quittiert haben.

Bei diesem Verfahren stellt sich grundsätzlich die Frage, was passiert, wenn eine Konfiguration noch nicht vollständig konfiguriert ist, aber bereits wieder rekonfiguriert werden soll. Abseits der Überlegung, ob ein derartiges Verhalten einer Applikation nicht einer besseren Programmierung bedarf, löst sich das Problem wie folgt: Versucht eine PAE das SyncReconfig an eine noch nicht konfigurierte PAE weiterzuleiten, erhält sie so lange kein ACK, bis die PAE konfiguriert ist und das SyncReconfig quittiert. Dadurch entsteht eventuell ein Performanceverlust, da bis auf die vollständige Konfiguration der zu löschenden Konfiguration gewartet wird, bevor diese gelöscht wird. Andererseits tritt dieser Fall aber äußerst selten und nur unter außergewöhnlichen Umständen auf.

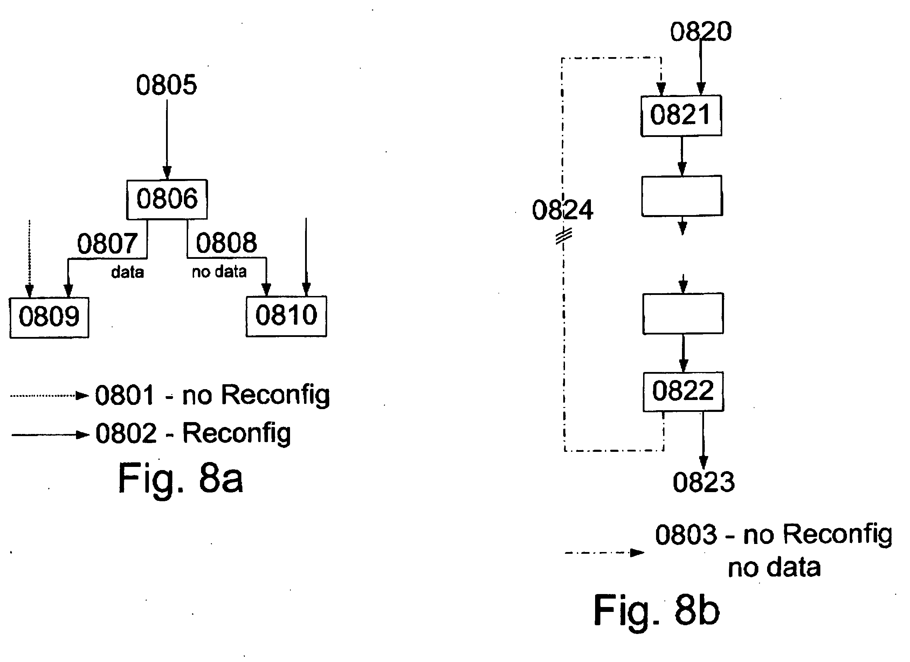

Figur 8a zeigt das anzuwendende Grundverfahren. SyncReconfig 0805 trifft bei der PAE 0806 ein, diese überträgt das Signal mit der Beendigung der Datenverarbeitung zusammen mit den Daten 0807 weiter. Auch während der Datenverarbeitung nicht genutzte, aber konfigurierte Verbindungen übertragen die Daten weiter (0808).

Bei der PAE 0809 trifft zwar das SyncReconfig von 0806 über 0807 ein. Für den zweiten Eingang steht SyncReconfig jedoch noch aus. Daher überträgt 0809 SyncReconfig nicht weiter. Die PAE 0810 erhält SyncReconfig über 0808, jedoch keine Daten. Über den zweiten Eingang erhält 0810 ebenfalls ein SyncReconfig. Obwohl keine Datenverarbeitung in 0810 stattfindet (die Daten über 0808 stehen aus), überträgt 0810 SyncReconfig - ohne Ergebnisdaten - weiter.

In Figur 8b ist die Verarbeitung einer Schleife dargestellt. Während der Datenverarbeitung werden Daten von der PAE 0822 zu der PAE 0821 rückgekoppelt (0824). Bei 0821 trifft ein SyncReconfig über 0820 ein. Dieses wird an die nachfolgenden PAEs in der Schleife weitergeleitet, bis zu 0822. Die PAE 0822 leitet das SyncReconfig an die nachfolgenden PAEs, die nicht zur Schleife gehören, weiter (0823). Über die Schleifenrückkopplung 0824 werden weder das SyncReconfig noch Daten übertragen (siehe Erklärung 0803).

0801 bedeutet, dass auf diesem Bus zum beispielhaft dargestellten Zeitpunkt kein SyncReconfig übertragen wurde. 0801 impliziert keine Aussage, ob Daten/Trigger übertragen wurden.

0802 bedeutet, dass auf diesem Bus zum beispielhaft dargestellten Zeitpunkt ein SyncReconfig übertragen wurde. 0802 impliziert keine Aussage, ob Daten/Trigger übertragen wurden.

0803 bedeutet, dass im Falle des Auftretens eines SyncReconfigs beim Datensender (in diesem Beispiel 0822) auf diesem Bus (unabhängig des Zeitpunktes) kein SyncReconfig übertragen wird. 0802 impliziert, dass auch keine Daten/Trigger übertragen werden.

### 7. Alternative Protokollierung

Es wird weiter ein Protokoll alternativ zu dem bekannten RdyAck-Datenfluss-Control-Protokoll beschrieben. Es stellt Datenströme auch dann sicher, wenn Register zwischen Sender und Empfänger bei hohen Taktfrequenzen eingeschoben werden. Zu diesem Ziel werden auch geeignete Hardware-Module vorgestellt.

Zu diesen Modulen werden wiederverwendbare Sender- und Empfängereinheiten extrahiert, insbesondere für die Kommunika-tion zwischen einem XPP-Prozessorfeld und einem XPP-Konfigu-rationscontroler. Diese Module und deren Code werden gleichfalls nachfolgend beschrieben. Es sei darauf hingewiesen, dass diese Module zum Teil XPP-FILMO-Module, wie sie bisher verwendet wurden, ersetzen und/oder ergänzen können.

Die Architektur, die das rdyack-Protokoll verwendet, ist in Fig. 9 dargestellt.

Der Sender hat auf anhängige Acks zu warten, bevor ein Rdy-Signal zugeordnet wird. Das bedeutet, dass der längste Weg, welcher die Frequenz eines solchen Systems bestimmt, der Weg von dem Empfänger zum Sender ist, und zwar durch die Logik des Senders und zurück zum Empfänger und seiner Register-Enable-Logik.

Ein eingeschobenes Register am Eingang des Senders wie in Fig. 10 gezeigt verkürzt den längsten Weg, aber die Logik muss einen Takt länger auf anhängige Acks warten. Die Datenübertragungsrate wird auf jeden zweiten Taktzyklus reduziert. Dies gilt auch, wenn das Pipelineregister nicht am Ack-Eingang, sondern auf dem Rdy- und Datenausgang vorgesehen wird.

Ein zweites Problem tritt auf, wenn das Protokoll an den PINS oder der I/O-Schnittstelle einer XPU verwendet wird. Die XPU kann richtig konfiguriert sein und ein Datenpaket nach außerhalb senden. Dies bedeutet, es sendet ein Rdy. Unter der Annahme, dass der angeschlossene Schaltkreis außerhalb nicht in der Lage ist, Daten zu empfangen, weil er nicht angeschaltet ist oder nicht vollständig programmiert ist, wird das Rdy verloren sein und die XPU wird anhalten. Später, wenn der angeschlossene Schaltkreis außerhalb der XPU in der Lage ist, Daten zu empfangen, wird er nicht reagieren, weil er kein Ack senden wird, ohne ein Rdy empfangen zu haben.

### 8. Erste Lösung mit dem KreditFifoprinzip:

Die hier vorgestellte KreditFifoidee löst das Problem des reduzierten Durchsatzes mit einem Fifo im Empfängereingang. Dem Sender ist immer erlaubt, ein weiteres Paket zu senden, wenn zumindest ein Ack anhängig ist.

Das heißt, wenn die Übertragung zum ersten Mal beginnt, werden zwei Pakete gesendet, ohne zu wissen, ob sie bestätigt (acked) werden oder nicht. So existiert das zweite Problem, das im vorherigen Abschnitt erwähnt wurde, noch.

Eine Alternative ist in Fig. 12 gezeigt. Das Protokoll zwischen Sender und Empfänger ist das gleiche, aber alle Module weisen Register in den Ausgängen als eine Designvariante auf. Dies ist nützlich für Synthese- und Zeitverhaltensabschätzungen. Die letztere Architektur benötigt nicht mehr Hardware als die vorherige, weil ein Datenregister auch in der vorhergehenden Variante vorzuliegen hat.

Nach einem weiteren neuen Vorschlag wird die Semantik des Ack-Signals geändert, und zwar zu einer Bedeutung eines "würde ein Ack - ergeben", das heißt, es zeigt die Fähigkeit, Daten zu empfangen. Daher werden diese Signale ,,ABLE" Signale genannt. Fig. 5 zeigt die Version mit Registern bei allen Modulausgängen.

Der Sender kann immer Daten in die Richtung des Empfängers absetzen, wenn das ABLE-Signal es ermöglicht. Dieses Protokoll kann das zweite Register im Empfängerteil verhindern, wenn sichergestellt ist, dass der Sender die übertragenden Daten stabil in einer stall-Situation hält, bis der Empfänger wieder "ABLE" signalisiert.

### 9.1 Protokollevaluierung - Kreditsystemsemantik

Das Kreditsystem weist die folgende Semantik auf:
Sender: "Hier ist mir gestattet, zwei Datenpakete zu senden und so viele zusätzliche Pakete, wie ich Bestätigungen (acknowledges) empfange. Wenn mir nicht erlaubt ist, ein weiteres Paket zu senden, dann muss der letzte Datenwert auf dem BUS gültig bleiben."
Empfänger: "Jedes empfangene Paket wird bestätigt, sobald ich in der Lage bin, ein weiteres zu empfangen."

### 9.2 Rdy-Able-Semantik

Das Rdy-Able Protokoll weist die folgende Semantik auf:
Sender: "Wenn das Able-Signal "hoch" ist, ist mir erlaubt, ein Datenpaket zu senden, welches auch gültig ist, wobei auf dem Verbindungsbus ein Rdy-Signal auf dem ganzen nächsten Takt liegt. Wenn das Able-Signal "niedrig" ist, dann muss ich sicherstellen, dass die augenblicklichen Daten auf dem Bus für einen weiteren Takt verbleiben.
Empfänger: ,,Able wird dem Verbindungsbus für den ganzen nächsten Takt immer dann zugeordnet, wenn ich sicher bin, dass kein hereinkommendes Datenpaket verloren geht."

Es kann eine Vielzahl von Varianten geben, das Rdy-Able-Protokoll zu implementieren, beispielsweise gepulstes Rdy-Able oder Rdy-Able mit gepulsten Daten. Die Bedeutungen von High und Low können umgekehrt zu dem vorstehend Beschriebenen sein. Für pulsartige Protokolle muss jedes Datenpaket nur für einen Zyklus gültig sein. Diese Variante braucht ein Eingangsregister im Empfänger mehr und kann nützlich sein, wenn der Bus zwischen Sender und Empfänger von mehr als einer Verbindung oder möglicherweise bidirektional verwendet wird. Ein Beispiel hierfür können bestimmte IO-Zusätze zu XPU-Architek-turen sein.

### Vergleich

Das Kreditsystem ist in Situationen stabiler, wo die Anzahl von Krediten dem Sender nicht bekannt ist, während Rdy-Able den Vorteil hat, dass Daten nicht gesendet werden, bis der Empfänger zum Aufnehmen von Daten in der Lage ist. Rdy hat ack-Zeitverlauf mit Kreditsystem. Fig. 6 zeigt das Bussignal zwischen einem Sender und einem Empfänger in einem Kreditsystem mit rdyack-Protokoll. Es sind fünf Fälle skizziert:
1. Übertragung eines einzelnen Paketes
2. Streaming
3. Empfänger ist nicht unmittelbar bereit, zu empfangen
4. Empfänger kann nur zu Beginn empfangen
5. Empfänger ist nicht bereit, weitere Daten zu empfangen, z. B. weil er nicht rekonfiguriert ist oder keine weiteren Daten an den nächsten Empfänger liefern kann

### 2.5 Fig. 15 zeigt das Bussignal zwischen einem Sender und einem Empfänger unter Verwendung des Rdy-Protokolls.

Es sind vier Fälle skizziert:
1. Übertragung eines einzelnen Paketes, mir erlaubt ist, während Able aktiv ist.
2. Das Streaming während Able konstant hoch ist.
3. Der Sender überträgt abhängig von der Fähigkeit des Empfängers Daten aufzunehmen.
4. Der Sender stoppt das Strömen für einen Takt.

Um den Kommunikationsbus für andere Benutzer öfter freizumachen, kann das gepulste Rdy-Able-Protokoll verwendet werden; es ist allerdings nicht der Standard, wenn einfachere Hardware gewünscht ist, weil es den Hardwareaufwand um ein Register vergrößert. Für den Vergleich kann auf Fig. 16 Bezug genommen werden.

Die Hardware für Rdy Fig. 17 zeigt ein allgemeines Modul, welches ein Senderteil und ein Senderteil für Daten unter Verwendung des Rdy-Protokolls aufweist. Ein spezifisches Modul kann seine erforderliche Datenverarbeitungshardware zwischen dem Sender und der Empfängereinheit einschieben. Auf die Sender- und Empfängereinheiten passen, wenn der mittlere Teil von Fig. 17 weggelassen wird, dann die lokalen Rdy, Able und Datensignale direkt aufeinander. Das resultierende Modul - nur ein Sender und eine Empfängereinheit - ist in einer Pipeline-Stufe nützlich, wo viele dieser Module zwischen einem realen datenproduzierenden und einem datenverbrauchenden Modul einsetzbar sind. Dies ist nützlich, wenn ein Sender und ein Empfänger über eine große Entfernung zu verbinden sind, ohne dass die Frequenz und dort der Durchsatz verringert werden soll.

Ein Modul muss nicht nur einen Empfänger und einen Sender enthalten. In vielen Fällen werden viele Empfänger und ein oder mehrere Sender in einem Modul vorgesehen sein, z. B. einer arithmetischen Logikeinheit oder einem dual ported ram. Dies ist dann sinnvoll, wenn Daten auf unterschiedliche Weise erzeugt werden oder wenn Daten über ein anderes Protokoll empfangen werden. Beispiele können konfigurierbare Zähler (ohne Empfänger) oder Displays (keine Weitersendung) sein.

### Einschub einfacher Register:

Wenn der Bus zwischen Sender und Empfänger einfache Registerstufen aufzuweisen hat, dann muss der Empfänger um zwei Register pro eingeschobene Stufe vergrößert werden. Ein Beispiel für diese Notwendigkeit ist, Registerstufen an Chipgrenzen vorzusehen, z. B. mit Register versehene Anschlussstücke.

### Anhang

### Empfänger und Sender für AMBA-Schnittstellen:

Fig. 18 zeigt eine mögliche Schnittstellenanordnung von AMBA zu der CM-Schnittstelle einer Einheit mit XPP-Kern.

Für externe Einheiten bei der CM-Schnittstelle eines XPP Kerns wird die Verwendung von zwei Modulen empfohlen.

Fig. 19 zeigt die interne Struktur des Empfängerteils, welches in der externen Schnittstelle für den 16-Bit-Ausgangs-port des Konfigurationsmanagers erforderlich ist.

Das Empfangen von Daten funktioniert wie folgt: Wenn das Empfängermodul eine 1(HOCH) an dem recv_valid zeigt, dann wurden Daten empfangen und sie sind augenblicklich verfügbar an dem recv_data-Ausgang. Wenn das umgebende Modul in der Lage ist, diese Daten zu erhalten, weist es recv_able eine 1(HOCH) zu. Dann sind die Daten nur verfügbar bis zum Ende des gleichen Taktes. Danach werden die als nächstes empfangenen Daten präsentiert, falls verfügbar.

Für einige Schaltkreise kann es nützlich sein, das recv_rdy-Signal zu verwenden, welches zeigt, dass Daten augenblicklich aus dem Empfänger genommen werden. Es ist ein UND-Logikresultat aus recv_valid und recv_able.

### Sender in externen Einheiten

Fig. 20 zeigt die interne Struktur des Senderteils, welches Teil des externen Moduls zu sein hat, welcher zu dem 16-Bit-Eingangsport des Konfigurationsmanagers eine Schnittstellenverbindung herstellt. Auch ein gebräuchlicher 43-Bit-Code-worteingang einer CM (Konfigurationsmanager) kann diesen Eingang extern erwarten. Beide Versionen können in einer Simulationsumgebung verfügbar sein.

Wenn dieses Modul und die XPP direkt verbunden sind, können die Signale send_req und n_back beide auf 0 (LOW) gesetzt werden. Die n_back und n_oe werden nicht verwendet. Das Senden von Daten geschieht wie folgt: Wenn das Sendermodul eine 1 (HOCH) am send_able zeigt, darf das send_rdy-Signal auf 1 (HOCH) gesetzt werden, und zwar mit gültigen Daten an dem send_data-Eingang. All dies geschieht im gleichen Takt. Wenn neue Daten im nächsten Takt verfügbar sind, kann das send_rdy wieder auf 1(HOCH) gesetzt werden, andernfalls ist es freizugeben. send_data braucht nicht gültig in irgendeinem Zyklus zu sein, wo send_rdy 0 (LOW) ist.

Beschrieben wurde somit vorstehend u. a. ein Verfahren zum Ansteuern von Bussystemen, wobei eine Aufschaltung auf einen Bus durch die Genehmigung der Verbindung durch Sender und Empfänger erfolgt.

Es wurde auch offenbart ein Verfahren zur Rekonfigurationssteuerung von rekonfigurierbaren Elementen, wobei Signale mit den Daten und/oder Trigger übertragen werden die die Rekonfiguration der rekonfigurierbaren Element und/oder Busse steuert.

Dabei wurde jeweils auch vorgeschlagen, die Art der Rekonfiguration derart zu steuern, dass wahlweise eine Rekonfiguration von zu einer Konfiguration gehörenden Objekten und insbesondere nur dieser unabhängig (forcedReconfig) von dem augenblicklichen Datenzustand oder abhängig davon (SyncReconfig) durchgeführt werden kann.

Es kann auch jeweils eine Blockade der Rekonfigurationsaufforderungreaktion und/oder Rekonfigurationsaufforderungweiterleitung für zumindest eine Rekonfigurierungsart an einzelnen Objekten einer Konfiguration vorgesehen sein.

Weiterhin kann vorgesehen sein, dass auf ein Erkennen einer Rekonfigurationsbedingung hin ein entsprechendes Signal (ReconfigEcho) an daten- und/oder triggerstromsignalaufwärts liegende Objekte gesandt wird.

Beschrieben wurde auch ein multidimensionales Feld von Elementen zur Datenbe- und/oder -verarbeitung, worin mit Schalter versehene Verbindungsstücke zur Verbindung der Elemente vorgesehen sind, wobei Mittel zur Schalterstellungsverwaltung derart ausgebildet sind, dass eine Verbindung der Elemente sender- und empfängerseitig kontrollierbar ist.

Bevorzugt wird dabei, dass die Elemente bzw. Objekte ausgewählt sind aus Busstrukturen wie Bussegmenten, dazwischengesetzte Registermittel, Logikzelleneinheiten wie PAEs, EALUs, ALUs, RAM-Elementen, insbesondere grobgranularen Logikzelleneinheiten.

Angegeben sei auch, dass ein multidimensionales Feld wie in den beiden vorhergehenden Absätzen beschrieben bevorzugt ist, wenn die Mittel zur Schalterstellungsverwaltung dazu ausgebildet sind, den Objekten zugeordnete, konfigurationsindikative Identifikationskennzeichnungen auszuwerten und eine Schalterschließstellung zwischen zwei Objekten von der Auswertung abhängig zu machen.

Es sei weiter daran erinnert, dass gleichfalls offenbart wurde ein Verfahren zur Steuerung eines Datenflusses in multidimensionalen Feldern aus Logikelementen, insbesondere grobgranularen Logikelementen, worin die Datenweitersendung verarbeitbarkeitsabhängig gemacht wird, wobei dem Sender das Senden eines Datenpaket erlaubt wird, wenn der Empfänger dem Verbindungsbus ein Signal zuordnet, das anzeigt, dass kein hereinkommendes Datenpaket verloren gehen kann und/oder dem Sender gestattet wird, zwei Datenpakete zu senden und so viele zusätzliche Pakete, wie er Bestätigungen vom Empfänger erhält (acknowledges), wobei der letzte Datenwert auf dem BUS gültig bleibt und der Empfänger jedes empfangene Paket bestätigt, sobald er in der Lage ist, weitere zu empfangen.

### Referenzliste

| | |
|---|---|
| PACT01 | P 44 16 881.0-53 |
| PACT02 | PCT/DE 97/02949 |
| PACT03 | PCT/DE 97/03013 |
| PACT04 | PCT/DE 97/02998 |
| PACT05 | PCT/DE 97/02999 |
| FACT06 | 197 04 044.6-53 |
| PACT07 | PCT/DE 98/00456 |
| PACT08 | PCT/DE 98/00334 |
| PACT09 | PCT/DE 98/03682 |
| PACT10 | PCT/DE 99/00504 |
| PACT10 | PCT/DE 99/00505 |
| PACT11 | PCT/EP 02/10065 |
| PACT12 | PCT/DE 99/00639 |
| PACT13 | PCT/DE 00/01869 |
| PACT14 | PCT/EP 01/08534 |
| PACT15 | PCT/EP 02/02398 |
| PACT16 | 102 06 857.7 |
| PACT16 | 102 40 000.8 |
| PACT17 | PCT/EP 01/06703 |
| PACT18 | PCT/EP 02/02403 |
| PACT19 | PCT/DE 03/00152 |
| PACT20 | PCT/EP 02/06865 |
| PACT21 | PCT/DE 02/03278 |
| PACT22 | PCT/EP 01/11299 |
| PACT24 | EP 01 102 674.7 |
| PACT25 | PCT/EP 02/02402 |
| PACT26 | EP 01 129 923.7 |
| PACT27 | 02 027 277.9 |
| PACT28 | PCT/EP 02/10084 |
| PACT29 | 102 12 622.4-53 |
| PACT29 | 102 19 681.8 |
| PACT30 | 102 36 271.8 |
| PACT30 | 102 38 174.7-53 |
| PACT31 | PCT/EP 02/10572 |
| PACT32 | PCT/EP 02/10479 |
| PACT33 | 102 36 272.6 |
| PACT33 | 102 38 173.9 |
| PACT34 | 102 41 812.8 |
| PACT36 | 102 36 269.6 |
| PACT36 | 102 38 172.0 |
| PACT37 | 102 43 322.4 |
| PACT39 | EP 02 022 692.4 |
| PACT40 | 103 00 380.0 |

## Patentansprüche

1. Reconfigurierbarer Datenverarbeitungsbaustein bestehend aus einer mehrdimensionalen Anordnung von rekonfigurierbaren Zellen und einem rekonfigurierbaren Bussystem, wobei
über das Bussystem zusätzliche Steuersignale übertragen werden, die eine Rekonfiguration anzeigen,
**dadurch gekennzeichnet, dass**
nach Eintreffen der Steuersignale in einer Zelle keine weiteren Information über deren ausgehenden Bussysteme weitergeleitet werden,
ein Echo des Steuersignals von der Zelle an den Sender zurückgesendet wird,
und das Echo die Freigabe zur Rekonfiguration des Senders und der Bussysteme zwischen der Zelle und dem Sender bewirkt.

## Claims

1. Reconfigurable data processing module consisting of a multidimensional arrangement of reconfigurable cells and a reconfigurable bus system,
additional control signals which indicate reconfiguration being transmitted via the bus system,
**characterized in that**
after the control signals have arrived in a cell, no further information is forwarded via the outgoing bus systems thereof,
an echo of the control signal is transmitted back from the cell to the transmitter,
and the echo effects release for the reconfiguration of the transmitter and the bus systems between the cell and the transmitter.

## Revendications

1. Module de traitement de données reconfigurable d'un agencement multidimensionnel de cellules reconfigurables et d'un système de bus reconfigurable, dans lequel
des signaux de commande qui indiquent une reconfiguration sont en outre transmis par l'intermédiaire du système de bus, **caractérisé en ce que**
après la réception des signaux de commande dans une cellule, aucune information supplémentaire ne sera transmise par l'intermédiaire de ses systèmes de bus de sortie,
**en ce qu'**un écho du signal de commande de la cellule est renvoyé à l'émetteur,
et **en ce que** l'écho provoque l'autorisation de la reconfiguration de l'émetteur et des systèmes de bus entre la cellule et l'émetteur.
